# EUROPÄISCHE PATENTANMELDUNG

(11) **EP 3 355 214 A1**
(43) Veröffentlichungstag der Anmeldung: **01.08.2018**
(21) Anmeldenummer: 17153538.8
(22) Anmeldetag: 27.01.2017
(51) Int. Cl.: G06F 17/50, G02C 13/00

(54) **VERFAHREN, RECHENEINRICHTUNG UND COMPUTERPROGRAMM ZUM BEREITSTELLEN EINES FASSUNGSRANDMODELLS**

(71) Anmelder: Carl Zeiss Vision International GmbH, 73430 Aalen (DE); Carl Zeiss AG, 73447 Oberkochen (DE)
(72) Erfinder: NIEUWENHUIS, Claudia, 73457 Essingen (DE); SCHWARZ, Oliver, 73492 Rainau (DE)
(74) Vertreter: Sticht, Andreas

(57) **Zusammenfassung**

Es wird ein Verfahren zur Bereitstellung eines Fassungsrandmodells, ein entsprechendes Computerprogramm sowie eine entsprechende Recheneinrichtung beschrieben. Zum Bereitstellen des Fassungsrandmodells wird zunächst eine Vielzahl von Datensätzen bereitgestellt (20), die jeweils einen Verlauf eines Fassungsrandes bezeichnen. Derartige Datensätze können beispielsweise aus Tracer-Daten gewonnen werden. Auf Basis dieser Datensätze wird dann ein parametrisches Fassungsrandmodell bereitgestellt (22).

## Beschreibung

Die vorliegende Anmeldung betrifft Verfahren und Vorrichtungen zum Bereitstellen eines Fassungsrandmodells einer Brillenfassung und entsprechende Computerprogramme und Recheneinrichtungen. Ein Fassungsrand einer Brillenfassung ist dabei derjenige Teil der Brillenfassung, in welchen dann ein Brillenglas eingepasst wird, wobei ein erster Abschnitt des Fassungsrands für ein linkes Brillenglas und ein zweiter Abschnitt des Fassungsrands für das rechte Brillenglas vorgesehen ist. Im Rahmen dieser Anmeldung wird unter einem Fassungsrand nicht nur der Fassungsrand einer ganz um das Brillenglas umlaufenden Brillenfassung verstanden, sondern auch die entsprechenden Größen bei fassungslosen Brillen oder Brillen mit Teilfassung, z.B. Brillenfassungsinnenrand, Stützscheibenaußenrand oder Brillenglasaußenrand. Unter einem Fassungsrandmodell ist eine mathematische und/oder geometrische Beschreibung des Fassungsrands einer Brillenfassung oder zumindest des ersten oder zweiten Abschnitt des Fassungsrands zu verstehen.

Um Brillengläser korrekt in einer Brillenfassung anzuordnen, d.h. zu zentrieren, sodass die Brillengläser in korrekter Position relativ zu den Augen einer Person, welche die Brille benutzen soll, getragen werden, werden sogenannte Zentrierparameter benutzt. Zentrierparameter sind beispielsweise in Kapitel 5 der Norm DIN EN ISO 13666:2012 definiert und umfassen den Hornhaut-Scheitelabstand oder den Vorneigungswinkel, welche in der oben genannten Norm definiert sind.

In den letzten Jahren wurden Vorrichtungen und Verfahren entwickelt, mit welchen derartige Zentrierparameter automatisch bestimmbar sind. Hierfür werden gleichzeitig oder sequentiell mehrere Bilder eines Kopfes einer Person, welche die jeweilige Brillenfassung trägt, aufgenommen und durch Bildanalyse aus den aufgenommenen Bildern die Zentrierparameter ermittelt. Dabei verwendete Algorithmen basieren unter anderem darauf, in den aufgenommenen Bildern die Fassungsränder der Brillenfassung zu erkennen.

Derartige Vorrichtungen und Verfahren sind beispielsweise in der DE 10 2011 115 239 A1 beschrieben. Bei der dort beschriebenen Herangehensweise liegt für eine momentan an einem Kopf einer Person zu vermessenden Brillenfassung ein Tracer-Datensatz vor. Ein Tracer ist dabei gemäß der oben erwähnten DIN EN ISO 13666 eine Vorrichtung zur genauen, oftmals dreidimensionalen Vermessung der Glasform einer Brillenfassung für die Formrandung des Glases, also eine Vorrichtung, welche den Fassungsrand einer Brillenfassung vermisst. Die Herangehensweise der DE 10 2011 115 239 B4 beruht dann darauf, eine durch den Tracer-Datensatz beschrieben Kontur in Bildaufnahmen zu finden. Dabei werden herkömmliche Verfahren der Bildanalyse wie Mustersuche oder das sogenannte Template Matching verwendet, wobei letzteres beispielsweise im Artikel "Template Matching" auf Wikipedia vom 17. Januar 2017 beschrieben ist. Mustersuche, auch als musterbasierte Suche oder Pattern Matching bezeichnet, ist eine Bezeichnung für symbolverarbeitende Verfahren, die anhand eines vorgegebenen Musters - in diesem Fall durch den Tracer-Datensatz vorgegeben - entsprechende Strukturen in den aufgenommenen Bildern identifizieren.

Durch die Verwendung des Tracer-Datensatzes wird die Erkennung des Fassungsrands in den Bildern gemäß den Ausführungen der DE 10 2011 115 239 B4 verglichen mit anderen Herangehensweisen erleichtert. Ein Nachteil dieser Herangehensweise ist jedoch, dass der Tracer-Datensatz und damit die aufgesetzte Brille bekannt sein muss, um den Fassungsrand in den aufgenommenen Bildern zu finden. Typischerweise werden jedoch bei einem Optiker Tracer-Daten von einer Fassung erst erzeugt, wenn ein Kunde die Brille schon zum Kauf ausgewählt hat. Da die Erzeugung der Tracer-Daten zeitaufwändig ist, werden sie üblicherweise zudem erst dann erzeugt, wenn der Kunde bereits das Optikergeschäft verlassen hat, da sonst eine lange Wartezeit für den Kunden entstehen würde. Auf der anderen Seite erfolgt die Bestimmung der Zentrierparameter im üblichen Arbeitsablauf bei einem Optiker unmittelbar nach der Auswahl der Brillenfassung, sodass der Kunde beim nächsten Besuch bereits die fertige Brille abholen kann.

Somit muss also für die Durchführung des Verfahrens der DE 10 2011 115 239 B4 der übliche Arbeitsablauf des Optikers geändert werden, was zudem Wartezeiten für den Kunden bei dem Besuch beim Optiker bedeutet. Zudem ist diese Herangehensweise auch deswegen umständlich, da hierzu jeder Optiker zu jeder Fassung den jeweiligen Tracer-Datensatz vorrätig haben muss oder vor der Bestimmung der Zentrierparameter erstellen muss. Schließlich werden die Tracer-Datensätze zumindest bevorzugt als dreidimensionale Datensätze (d.h. Datensätze, welche den dreidimensionalen Verlauf des Fassungsrandes beschreiben) benötigt, während manche herkömmlichen Tracer nur zweidimensionale Datensätze erzeugen, welche den Verlauf des Fassungsrandes in einer Ebene beschreiben.

Vor diesem Hintergrund ist es eine Aufgabe der vorliegenden Anmeldung, Verfahren, Recheneinrichtungen und Computerprogramme zur Bereitstellung eines Fassungsrandmodells bereitzustellen, wobei das Fassungsrandmodell eine Vielzahl von Brillenfassungen abdecken soll, sodass beispielsweise für die oben erläuterte Bildanalyse zum Zwecke der Zentrierparameterbestimmung nicht für jede Brillenfassung ein separater Tracer-Datensatz erstellt werden muss.

Erfindungsgemäß wird ein Verfahren zum Bereitstellen eines Fassungsrandmodells nach Anspruch 1, ein Computerprogramm nach Anspruch 14 sowie eine Recheneinrichtung nach Anspruch 15 bereitgestellt. Die Unteransprüche definieren weitere Ausführungsformen sowie ein Verfahren zur Bildanalyse, welches ein derartiges Fassungsrandmodell verwendet.

Erfindungsgemäß wird ein Verfahren zum Bereitstellen eines Fassungsrandmodells bereitgestellt, umfassend:
Bereitstellen einer Vielzahl von Datensätzen, die jeweils einen Verlauf eines Fassungsrandes einer jeweiligen Brillenfassung beschreiben, und
Bereitstellen eines parametrischen Fassungsrandmodells auf Basis der Vielzahl von Datensätzen.

Unter einem Verlauf eines Fassungsrandes ist dabei der Verlauf des Fassungsrandes für ein Brillenglas oder für beide Brillengläser (linkes und rechtes Brillenglas) zu verstehen, d.h. für einen oder beide der oben erwähnten Abschnitte. Ein parametrisches Fassungsrandmodell ist ein Fassungsrandmodell, welches einen oder mehrere veränderbare Parameter aufweist. Durch Änderung des Parameters oder der Parameter ändert sich dann die Geometrie des durch das Fassungsrandmodell beschriebenen Fassungsrandes, beispielsweise hinsichtlich Größe oder Form oder hinsichtlich der Ausrichtung von ersten und zweiten Abschnitten für die zwei Brillengläser zueinander. Dies ähnelt dem parametrischen Modellieren in der CAD (Computer Aided Design)-Technik (vergleiche http://www.blien.de/ralf/cad/db/para_mod.htm Stand 27.01.2017), wobei bei der vorliegenden Anmeldung die Parameter nicht auf Maße beschränkt sind und allgemein Änderungen der Geometrie z.B. hinsichtlich Größe und/oder Form durch Änderungen der Parameter möglich sind.

Indem das parametrische Fassungsrandmodell auf Basis der Vielzahl von Datensätzen bereitgestellt ist, fließen eine Vielzahl von Datensätzen in das Modell ein. Dies bewirkt, dass das parametrische Fassungsrandmodell auf eine Vielzahl verschiedener Brillenfassungen anwendbar ist, auch auf Brillenfassungen, welche nicht von einem Datensatz der Vielzahl von Datensätzen direkt beschrieben werden. Durch den Parameter oder die Parameter des parametrischen Fassungsrandmodells kann das parametrische Fassungsrandmodell dann an den Fassungsrand einer konkreten Brillenfassung angepasst werden.

Als Datensätze können dabei Tracer-Datensätze von verschiedenen Brillendaten von Brillenfassungen herangezogen werden, welche über eine entsprechende Vielzahl von Brillenfassungen bestimmt wurden. Bei anderen Ausführungsformen können alternativ hierzu auch CAD-Daten (Computer Aided Design) der Brillenfassungen von Brillenfassungsherstellern herangezogen werden, welche von den Brillenfassungsherstellern zur Fertigung oder zum Entwurf der Brillenfassungen verwendet wurden. Bevorzugt liegen die Datensätze dabei als 3D-Datensätze vor, d.h. sie beschreiben den räumlichen Verlauf des jeweiligen Fassungsrandes. Auf diese Weise ergeben sich genauere Modelle, da alle drei Raumrichtungen bestimmt werden können. Es ist jedoch auch die Verwendung von 2D-Datensätzen, welche den Verlauf der Fassungsränder nur in einer Ebene beschreiben, möglich.

Durch das Heranziehen der Vielzahl von Datensätzen kann insbesondere erreicht werden, dass das parametrische Fassungsrandmodell keine "untypischen" Fassungsrandverläufe zulässt, z.B. keine Fassungsränder, die abgeschnittenen Brillengläsern, nicht symmetrischen Brillengläsern, oder Brillengläsern mit Glasrändern, die eine Ausbeulung oder Einstülpung, also eine hoher Krümmung aufweisen, entsprechen.

Die Datensätze liegen bevorzugt als 3D-Datensätze vor, d.h. Datensätze, welche den Verlauf des jeweiligen Fassungsrandes dreidimensional beschreiben. Insbesondere können die Datensätze als Punktwolken mit einer Vielzahl von Messpunkten, welche auf dem Fassungsrand liegen, vorliegen. Falls nur 2D-Datensätze vorhanden sind (d.h. Beschreibungen des Fassungsrandes in einer Ebene), beispielsweise weil ein Tracer nur 2D-Datensätze liefert, kann durch Approximation von Brillengläsern, die von dem Fassungsrand umrandet werden, als Ebenen, hieraus ein dreidimensionaler Datensatz erzeugt werden. Hierzu können beispielsweise bei einer Ausführungsform typische Werte für Zentrierparameter wie der Vorneigungswinkel (gemäß 5.18 der DIN EN ISO 13666:2012) und der Fassungsscheibenwinkel (gemäß 17.3 der DIN EN ISO 13666:2012) bestimmt werden. Diese Bestimmung kann aus Bestellstatistiken für Brillengläser erfolgen, indem Mittelwerte für Vorneigungswinkel und Fassungsscheibenwinkel über eine Vielzahl von Brillengläsern ermittelt werden. Zudem kann eine Symmetrie von zwei Ebenen, in denen die Brillengläser liegen, zueinander angenommen werden. Mit Vorneigungswinkel, Fassungsscheibenwinkel und der Annahme der Symmetrie ergibt sich dann die Lage der zwei Ebenen (z.B. definiert durch Normalenvektoren auf den Ebenen und Aufpunkte für die Normalenvektoren), in die dann die 2D-Datensätze hineinprojiziert werden.

Auch wenn 3-D Datensätze und entsprechend 3D-Fassungsrandmodelle bevorzugt sind, ist mit dem erfindungsgemäßen Verfahren auch eine Bereitstellung eines 2D-Modells auf Basis von 2D-Datensätzen möglich.

Das Bereitstellen des parametrischen Fassungsrandmodells kann bei einer Variante ein Berechnen des parametrischen Fassungsrandmodells aus der Vielzahl von Datensätzen umfassen. Hier wird also die Vielzahl von Datensätzen als Grundlage für eine Neuerstellung eines parametrischen Fassungsrandmodells verwendet. Ein Beispiel hierfür ist ein maschinelles Lernen auf Basis der Vielzahl von Datensätzen. Maschinelles Lernen ist im Überblick in dem Wikipedia-Artikel "Maschinelles Lernen" vom 17. Januar 2017 erläutert und ist ein Oberbegriff für die künstliche Generierung von Wissen aus Erfahrung. In dem vorliegenden Beispiel stellt die Vielzahl von Datensätzen die Erfahrung dar, und das parametrische Fassungsrandmodell stellt das generierte Wissen dar. Der genannte Wikipedia-Artikel gibt auch einen Überblick über verschiedene Ansätze und Algorithmen, welche hier zum Einsatz kommen können.

Eine mögliche Herangehensweise zur Berechnung des parametrischen Fassungsrandmodells aus der Vielzahl von Datensätzen ist die Anwendung einer Hauptkomponentenanalyse. Die Hauptkomponentenanalyse oder englisch "Principle Component Analysis" (PCA) ist ein Verfahren der multivarianten Statistik, bei der eine Vielzahl sogenannter "Hauptkomponenten" erstellt wird, wobei die Datensätze dann als Summe aus einem Mittelwert und einer Linearkombinationen dieser Hauptkomponenten dargestellt werden können. Hierzu wird beispielsweise zunächst der Mittelwert aus der Vielzahl von Datensätzen bestimmt und von den Datensätzen abgezogen. Aus dem Ergebnis werden dann die Hauptkomponenten bestimmt. Die Hauptkomponenten sind dabei orthogonal zueinander. Dies bedeutet, dass die Darstellung jedes Datensatzes eindeutig ist, d.h. dass die jeweilige Linearkombination eindeutige Koeffizienten aufweist. Diese Koeffizienten einer derartigen Linearkombination der Hauptkomponenten stellen dann die Parameter des parametrischen Fassungsrandmodells dar. Genauer beschrieben ist die Hauptkomponentenanalyse beispielsweise in dem Artikel "Hauptkomponentenanalyse" auf Wikipedia vom 17. Januar 2017.

Als Alternative kann eine Unabhängigkeitsanayse (englisch "Independent Component Analysis, ICA) verwendet werden, die beispielsweise in dem Artikel "Unabhängigkeitsanalyse" auf Wikipedia vom 20. Januar 2017 beschrieben ist. Bei dieser Art der Analyse ergeben sich ebenfalls Komponenten, die als Linearkombination summiert zu einem Mittelwert die Datensätze darstellen können. Die Komponenten sind hier jedoch nicht orthogonal, so dass es zumindest teilweise mehrere Möglichkeiten (d.h. mehrere Sätze von Koeffizienten) gibt, einen Datensatz darzustellen. Auch hier stellen die Koeffizienten der Linearkombination die Parameter des parametrischen Fassungsrandmodells dar.

Bei einer anderen Variante umfasst das Bereitstellen des parametrischen Fassungsrandmodells ein Berechnen von Wahrscheinlichkeitsverteilungen für Parameter eines vorgegebenen parametrischen Fassungsrandmodells auf Basis der Vielzahl von Datensätzen. Bei dieser Variante wird also kein parametrisches Fassungsrandmodell völlig neu erstellt, sondern es wird zunächst ein parametrisches Fassungsrandmodell vorgegeben. Ein einfaches Beispiel für ein derartiges Modell sind zwei zu einer Mittelebene symmetrische Ebenen, wobei jede Ebene näherungsweise die Lage eines Brillenglases beschreibt. Anstelle der Ebenen sind auch Formen höherer Ordnung möglich, beispielsweise quadratische oder kubische Splines mit zugehörigen Parametern. Splines sind dabei Funktionen, die stückweise aus quadratischen, kubischen oder Funktionen noch höherer Ordnung zusammengesetzt sind derart, dass die Übergänge stetig oder stetig differenzierbar sind. Splines sind beispielsweise in dem Wikipedia-Artikel "Spline" vom 17. Januar 2017 beschrieben. Zusätzlich können auch die Fassungsränder dann über parametrische geometrische Formen innerhalb der Ebenen weiter beschrieben werden. Ein einfaches Beispiel hierfür sind Ellipsen, welche beispielsweise durch die Länge der großen Halbachsen, üblicherweise mit a bezeichnet, und der kleinen Halbachsen, üblicherweise mit b bezeichnet, als Parameter charakterisiert werden können. Dabei ist die Hauptachse, welche aus den großen Halbachsen gebildet ist, diejenige Achse, die durch die Brennpunkte der Ellipse verläuft, und die Nebenachse, welche aus zwei kleinen Halbachsen gebildet wird, steht senkrecht dazu.

Für diese Parameter können dann Wahrscheinlichkeitsverteilungen erstellt werden. Hierzu kann das vorgegebene parametrische Fassungsrandmodell beispielsweise an jeden der Datensätze angepasst (gefittet) werden, um jeweilige Parameterwerte für den Datensatz zu erhalten. Ein derartiges Anpassen kann beispielsweise mit der Methode der kleinsten Quadrate (siehe Wikipedia-Artikel "Methode der kleinsten Quadrate" vom 17. Januar 2017) oder auch mit anderen herkömmlichen Fit-Verfahren geschehen. Auf diese Weise werden Parameterwerte für die Vielzahl von Datensätzen erhalten, die dann statistisch ausgewertet werden können. Beispielsweise können Mittelwert und Standardabweichung für jeden der Parameterwerte angegeben werden.

Diese Wahrscheinlichkeitsverteilungen können dann bei einer späteren Verwendung des Modells zur schnelleren Anpassung des parametrischen Fassungsrandmodells an einen konkreten Fassungsrand (beispielsweise einen in einem Bild identifizierten Fassungsrand) verwendet werden, indem Anpassungsverfahren verwendet werden, die die statistische Verteilung mit berücksichtigen. Derartige Optimierungsverfahren, die Wahrscheinlichkeitsverteilungen mit berücksichtigen, umfassen beispielsweise Markov-Chain-Monte-Carlo-Verfahren (MCMC-Verfahren). Derartige Optimierungsverfahren sind beispielsweise in Christopher Bishop, "Pattern Recognition and Machine Learning", Springer Verlag 2006, ISBN-10: 0-387-31073-8 beschrieben. Diese Verfahren schätzen optimale Parameter eines Modells, indem die einzelnen Parameter zufällig entsprechend ihrer Wahrscheinlichkeitsverteilung gewählt werden und dann bewertet wird, wie gut das daraus resultierende konkrete Modell (d.h. das Modell mit den so gewählten Parametern) auf die Daten passt. Dies wird sehr oft wiederholt, z.B. mehr als 10000-mal oder mehr, wobei die Wiederholungszahl auch vom jeweils gewählten Verfahren und dessen Implementierung abhängt. Als Ergebnis erhält man eine Wahrscheinlichkeitsverteilung über Modellparametersätze (also über alle Parameter zusammen), aus der z.B. der Parametersatz mit der höchsten Wahrscheinlichkeit als "best fit", d.h. als angepasstes Modell, ausgewählt werden kann.

Bei einer weiteren Variante umfasst das Bereitstellen des parametrischen Fassungsrandmodells ein Bereitstellen der Vielzahl von Datensätzen oder einer aus der Vielzahl von Datensätzen abgeleitete Vielzahl von weiteren Datensätzen als das Modell, wobei ein Parameter des parametrischen Fassungsrandmodells dann einen Datensatz der Vielzahl von Datensätzen oder der Vielzahl von weiteren Datensätzen angibt. Hier werden also die Datensätze oder davon abgeleitete weitere Datensätze direkt als Modell verwendet, und ein Parameter gibt einen jeweiligen Datensatz, beispielsweise eine Nummer des Datensatzes an. Bei einem derartigen parametrischen Fassungsrandmodell kann dann zu einer Anpassung beispielsweise an einen in einem Bild gefundenen Fassungsrand derjenige Datensatz ausgewählt werden, der dem Fassungsrand im Bild am nächsten kommt (beispielsweise wiederum mittels der Methode der kleinsten Quadrate). Abgeleitete weitere Datensätze sind dabei Datensätze, die aus der Vielzahl von Datensätzen durch Anwendung mathematischer Operationen wie den nachstehend erläuterten Transformationen erhalten werden.

Bei manchen Ausführungsbeispielen umfasst das Bereitstellen des parametrischen Fassungsrandmodells ein Transformieren der Vielzahl von Datensätzen. Auf diese Weise wird eine Vielzahl von transformierten Datensätzen erhalten. Unter einer Transformation eines Datensatzes ist dabei die Anwendung einer Operation auf den Datensatz zu verstehen, welche den Datensatz in einer andere Form überführt, wobei die Information des Datensatzes über die Geometrie des Fassungsrandes zumindest näherungsweise erhalten bleibt. Derartige Transformationen können insbesondere der Normierung oder Umparametrisierung dienen, um die Vielzahl von Datensätzen gleichsam in ein einander entsprechendes Format zu bringen. Eine Umparametrisierung ist dabei ein Wechsel der Parameter und/oder Werte (z.B. Koordinaten), die den Fassungsrand beschreiben, wie ein Wechsel eines verwendeten Koordinatensystems oder ein Wechsel einer Basis wie z.B. eines Bezugspunkts eines verwendeten Koordinatensystems. Konkrete Beispiele werden weiter unten erläutert.

Hierzu kann die Transformation insbesondere eine Koordinatentransformation umfassen. So können in kartesischen Koordinaten ((x, y) in 2D bzw. (x, y, z) in 3D) vorliegende Datensätze in Polarkoordinaten (ϕ, r) (in 2D) oder Kugelkoordinaten (ϕ, ψ, r) (in 3D) überführt werden. Zudem können mittels einer Koordinatentransformation die Koordinatensysteme der Datensätze auf einander entsprechende Bezugspunkte gebracht werden. Beispielsweise kann der Mittelpunkt eines Abschnitts des Fassungsrandes für ein Brillenglas als Bezugspunkt dienen, wobei als Mittelpunkt insbesondere der geometrische Schwerpunkt verwendet werden kann. Bei anderen Ausführungsformen kann auch ein Mittelpunkt zwischen den Fassungsrandteilen für die beiden Brillengläser als Bezugspunkt dienen. Zudem kann mittels der Koordinatentransformation eine Drehung erfolgen, um die Datensätze in gleicher Richtung auszurichten. So kann beispielsweise eine horizontale Richtung, welche die Mittelpunkte nach Kastensystem (5.4 DIN EN ISO 13666 aus 10/2013) von rechten und linken Brillengläsern in der jeweiligen Brillenfassung verbindet, als x-Achse definiert werden, und Richtungen senkrecht dazu als y-und z-Achse. Beispielsweise kann ein Mittelwert einer Normalen von Ebenen durch die durch die Datensätze definierten Brillengläser als z-Achse (bei Datensätzen, die beide Abschnitte des Fassungsrandes beschreiben, für eines der Brillengläser, z.B. das linke) und eine Richtung senkrecht hierzu als y-Achse definiert werden. Durch Drehungen werden dann sämtliche Datensätze der Vielzahl von Datensätzen in dieses Koordinatensystem ausgerichtet.

Zudem kann die Transformation auch ein Neuabtasten (im Englischen als "resampling" bezeichnet) der durch die Datensätze definierten Fassungsränder umfassen, bei welcher die durch die Datensätze definierten Geometrien beispielsweise in Polarkoordinaten mittels konstanter Winkelschritte um einen gemeinsamen Bezugspunkt abgetastet werden. Der Bezugspunkt kann dabei wie oben erläutert gewählt werden. Auf diese Weise werden die Datensätze hinsichtlich ihrer Darstellung vereinheitlicht, was die nachfolgende weitere Verarbeitung, beispielsweise die Anwendung von Maschinenlernverfahren wie oben erläutert, vereinfacht. Ein derartiges Neuabtasten ist ein Beispiel für eine Umparametrisierung.

Das Transformieren kann auch eine Filterung der Datensätze mit einem Tiefpassfilter umfassen, um eine Glättung der von den Datensätzen definierten Fassungsrandgeometrien zu bewirken. Hierdurch können beispielsweise Rauschen oder andere Messartefakte, die bei der Erstellung der Datensätze auftraten, reduziert oder eliminiert werden. Beispiele für eine derartige Filterung umfassen eine Gauß-Filterung (vergleiche den Wikipedia-Artikel "Gauß-Filter" Stand 18. Januar 2017) oder eine Fourier-Filterung. Bei einer Fourier-Filterung wird auf den Datensätzen eine Fourier-Transformation von dem Ortsraum in den Frequenzraum durchgeführt, und zur Tiefpassfilterung dann hochfrequente Anteile des sich ergebenden Frequenzspektrums gedämpft, d.h. reduziert. Für diese Fourier-Filterung können zwei Dimensionen der Daten von Punkten der Datensätze (beispielsweise x- und y-Koordinaten von Punkten der Datensätze) als komplexe Zahlen dargestellt werden, indem die x-Koordinate den Realteil und die y-Koordinate den Imaginärteil angibt). Bei dreidimensionalen Datensätzen kann die dritte Dimension (in diesem Fall die z-Koordinate) separat gefiltert werden. Dabei kann die Periodizität der Fourier-Basis für die Fouriertransformation ausgenutzt werden. Auch eine Gauß-Filterung im Frequenzraum ist möglich, wobei hier die 3 Dimensionen unabhängig voneinander gefiltert werden können und die Periodizität ausgenutzt werden kann, indem eine periodische Fortsetzung am Anfang und am Ende erfolgt.

Danach kann eine Rücktransformation (inverse Fourier-Transformation) erfolgen. Bei anderen Ausführungsbeispielen kann auch eine weitere Verarbeitung, beispielsweise die oben erwähnte Berechnung des Modells, im Frequenzraum erfolgen und beispielsweise erst danach eine Rücktransformation erfolgen.

Das Transformieren kann auch eine Approximation der Datensätze durch parametrische Kurven umfassen. Parametrische Kurven sind Kurven, welche durch Parameter beschrieben werden. Ein Beispiel für derartige parametrische Kurven sind die bereits erwähnten Splines. Diese Kurven werden bei derartigen Ausführungsformen an jeden der Datensätze angepasst, beispielsweise wiederum mittels der Methode der kleinsten Quadrate, sodass letztendlich jeder Datensatz dann durch die jeweiligen Parameter, beispielsweise Spline-Koeffizienten, charakterisiert ist. Dies führt zum einen zu einer Glättung, da gleichsam glatte Kurven durch die Datensätze definierten Punkte gelegt werden. Auf diese Weise werden die Datensätze in eine Darstellung mit weniger Freiheitsgraden (nur noch die Parameterwerte) reduziert, was einen Rechenaufwand bei einer nachfolgenden Verarbeitung zum Bereitstellen des parametrischen Fassungsrandmodells vereinfachen kann. Ein derartiges Anpassen von parametrischen Kurven ist ein weiteres Beispiel für eine Umparametrisierung.

Ein Beispiel einer derartigen nachfolgenden Verarbeitung ist eine Bildanalyse. Für eine derartige Bildanalyse wird erfindungsgemäß ein Verfahren bereitgestellt, umfassend: Bereitstellen mindestens eines Bildes zumindest eines Teils eines Kopfes, welcher eine Brillenfassung trägt,
Bereitstellen eines parametrischen Fassungsrandmodells, welches mit einem der oben diskutierten Verfahren erstellt wurde, und
Analysieren des mindestens einen Bildes unter Verwendung des parametrischen Fassungsrandmodells.

Unter der Analyse des Bildes ist dabei eine Verarbeitung des Bildes zu verstehen, welche dazu beiträgt, letztendlich Informationen aus dem mindestens einen Bild, beispielsweise Zentrierparameter, zu erhalten. Durch die Verwendung des parametrischen Fassungsrandmodells bei der Analyse kann die Analyse vereinfacht werden, wofür nachstehend Beispiele erörtert werden.

Das Bereitstellen des mindestens einen Bildes kann beispielsweise ein Aufnehmen eines oder mehrerer Bilder mit einer oder mehreren Kameras umfassen, welche in einer festen Geometrie angeordnet sind. Bei mehreren Kameras mit fester Geometrie oder einer einzigen Kamera, die relativ zu dem Kopf eine vorgegebene (und somit bekannte) oder auch beliebige Bewegung ausführt, um den Kopf aus verschiedenen Richtungen aufzunehmen, ermöglicht dies insbesondere eine Triangulation des Kopfes, d.h. ein Bestimmen einer dreidimensionalen Kontur des Kopfes. Eine derartige Bildaufnahme wird beispielsweise auch in der eingangs erwähnten DE 10 2011 115 239 A1 beschrieben.

Für die Bildanalyse unter Verwendung des parametrischen Fassungsmodells gibt es verschiedene Möglichkeiten. So kann das parametrische Fassungsmodell verwendet werden, um ein Segmentieren des mindestens einen Bildes, insbesondere ein Identifizieren des Fassungsrandes in dem mindestens einen Bild, zu erleichtern. Unter einem Segmentieren wird dabei allgemein das Identifizieren bestimmter Bildbestandteile verstanden.

Zu bemerken ist, dass bei der Segmentierung des Fassungsrandes zwei Hauptprobleme auftreten. Zum einen können Fassungskanten schlecht oder gar nicht identifizierbar sein (z.B. bei randlosen Brillenfassungen oder bei Brillenfassungen mit Farben, die der Hautfarbe ähneln). Dies kann dazu führen, dass Kanten nur unvollständig identifiziert werden. Zum anderen können im Bild vorhandene Kanten fälschlicherweise als Fassungskanten identifiziert werden (z.B. wenn durch den äußeren Rand der Brille die Haare oder der Hintergrund zu sehen sind, entstehen starke Kanten zur Hautfarbe des Gesichts, die leicht mit der Fassungskante verwechselt werden). Um unvollständige Kanten korrekt zu schließen und/oder um falsche Kanten auszuschließen, kann das parametrische Fassungsmodell herangezogen werden, da das parametrische Fassungsradmodell keine untypischen Fassungsrandverläufe zulässt (z.B. abgeschnittene Gläser, nicht symmetrische Gläser, Glasränder mit Ausbeulung oder Einstülpung, also mit hoher Krümmung etc.)

Bei einer solchen Segmentierung kann bei einer Ausführungsform im Falle eines 2D-Fassungsrandmodells der Raum der möglichen Lösungen für den in dem Bild zu identifizierenden Fassungsrand auf die durch das parametrische Fassungsmodell vorgegebenen Möglichkeiten eingeschränkt werden, d.h. es wird von vornherein nur nach Fassungsrändern in dem Bild gesucht, welche von dem parametrischen Fassungsmodell beschreibbar sind. Bei einem 3D-Fassungsrandmodell werden bei einer Ausführungsform Kamera-Kalibrierungsdaten herangezogen. Die Kamera-Kalibrierungsdaten beschreiben eine Abbildungsvorschrift von (dreidimensionalen) Punkten im Raum auf ein von einer für die Aufnahme des mindestens einen Bildes benutzen Kamera aufgenommenen Bildes. Mit Hilfe dieser Kamera-Kalibrierungsdaten kann das parametrische Fassungsrandmodell in das Bild projiziert werden und zur Identifizierung von Kanten des Fassungsrandes verwendet werden. Unter einer Projektion wird dabei eine Abbildung eines 3D-Modells in ein 2D-Bild verstanden. Wenn keine Kalibrierungsdaten vorliegen sollten, kann bei manchen Ausführungsformen das Fassungsrandmodell in das mindestens eine Bild projiziert werden, z.B. indem die obenerwähnte Abbildungsvorschrift mitoptimiert wird.

Das mindestens eine Bild kann auch mehrere Bilder umfassen, welche aus verschiedenen Richtungen aufgenommen werden, z.B. als Stereobildaufnahme. Mittels Triangulation kann hieraus gemäß aus der Stereobildaufnahme bekannten Rechenschritten ein 3D-Bild berechnet werden, in dem das 3D-Fassungsrandmodell dann zur Identifizierung des Fassungsrandes verwendet werden kann. Mit dem Identifizieren des Fassungsrandes in dem Bild sind dann auch die Parameter des parametrischen Fassungsrandmodells für diesen Fassungsrand bekannt, z.B. wenn das Segmentieren und das Bestimmen der Parameter in einem gemeinsamen Optimierungsverfahren erfolgt. Das parametrische Fassungsrandmodell mit den so bestimmten Parametern kann dann z.B. zur Bestimmung von Zentrierparametern verwendet werden, wie weiter unten kurz erläutert wird.

Liegen wie oben erläutert Wahrscheinlichkeitsverteilungen für die Parameter des parametrischen Fassungsrandmodells vor, können diese ebenso herangezogen werden, indem beispielsweise bei der Bildanalyse zunächst von einem Mittelwert des Parameters ausgegangen wird.

Zur Verbesserung der Identifizierung des Fassungsrandes kann bei einer anderen Ausführungsform auch eine Abweichung eines aus dem mindestens einen Bild ermittelten Fassungsrand von dem parametrischen Fassungsrandmodell einbezogen werden, beispielsweise in Form eines Strafterms in einer Kostenfunktion zur Bestimmung des Fassungsrandes in dem mindestens einen Bild. Der Strafterm wird dann umso größer, je weiter ein momentan identifizierter Fassungsrand von dem parametrischen Fassungsrandmodell entfernt ist. Dies stellt also einen Zusatz in bestehenden Optimierungsverfahren dar, beispielsweise in einem MCMC-Verfahren oder Gradientenabstiegsverfahren, Graph Cut Verfahren, Markov Random Field Omtimierungsverfahren und dergleichen. Derartige Optimierungsverfahren sind beispielsweise in Christopher Bishop, "Pattern Recognition and Machine Learning", Springer Verlag 2006, ISBN-10: 0-387-31073-8 beschrieben. Hierfür werden bei einer Ausführungsform mögliche Fassungsränder mathematisch, z.B. als Folge von Punkten oder auch als Binärfunktion auf dem Bild mit einem Argument der Funktion z.B. zwischen 0 und 1 beschrieben. Die Menge möglicher Fassungsränder stellt dabei eine Fassungsrandfunktionenschar dar. Um den Fassungsrand bzw. dessen Form dann in dem mindestens einen Bild zu identifizieren, wird eine Kostenfunktion definiert, die z.B. die Kanten im Bild oder die Farben im Bild benutzt und jedem möglichen Fassungsrand einen Wert zuordnet. Das Minimum dieser Kostenfunktion (minimiert wird über die Fassungsrandfunktionenschar- die Kostenfunktion ist also eine Funktion von Funktionen bzw. Fassungsrändern) ist dann die beste Fassungsrandfunktion, die zu den Annahmen (Kanten und Farbe etc.) in der Kostenfunktion passt. Zusätzlich zu den anderen Termen in der Kostenfunktion (Kante, Farbe, Symmetrie etc.) kann man dann einen Strafterm zur Kostenfunktion dazu addieren, der die Abweichung des in dem mindestens einen Bild zu identifizierenden Fassungsrandes (in der mathematischen Repräsentation) von allen möglichen Konturen, die das parametrische Fassungsrandmodell beschreiben kann, enthält. Ein Strafterm ist dabei allgemein ein zusätzlicher Term in der Kostenfunktion, welcher die "Kosten", d.h. den Wert der Funktion, in Abhängigkeit von bestimmten Umständen erhöht, in diesem Fall abhängig von einer Abweichung des Fassungsrandes von dem parametrischen Fassungsrandmodell. Das heißt, dass Lösungen für den zu identifizierenden Fassungsrand, die weit weg vom Raum der von dem parametrischen Fassungsrandmodell beschreibbaren Fassungsränder liegen, hohe Kosten haben bei einer Optimierung des zu identifizierenden Fassungsrandes (d.h. bei einer Optimierung, die dazu dient, einen Fassungsrand möglichst gut in dem mindestens einen Bild zu identifizieren, sodass der identifizierte Fassungsrand möglichst genau dem tatsächlich vorliegenden Fassungsrand entspricht. Diesen Strafterm kann man zu allen möglichen Kostenfunktionen dazu addieren, die den in dem mindestens einen Bild zu identifizierenden Fassungsrand optimieren.

Bei einer anderen Möglichkeit der Analyse wird in dem Bild mittels herkömmlicher Verfahren der Fassungsrand identifiziert, beispielsweise mit den in der Beschreibungseinleitung der DE 10 2011 115 239 A1 genannten Verfahren. An diesen identifizierten Fassungsrand wird dann das parametrische Fassungsrandmodell angepasst, d.h. die Parameter des parametrischen Fassungsrandmodells werden optimiert, um eine möglichst große Übereinstimmung des parametrischen Fassungsrandmodells zu dem in dem mindestens einen Bild identifizierten Fassungsrand zu erreichen. Diese Anpassung kann nach der Methode der kleinsten Quadrate oder einem anderen herkömmlichen Optimierungsverfahren erfolgen. Bei dieser Anwendung ist die Bestimmung der Parameter des parametrischen Fassungsrandmodells einfacher als in dem Fall, in dem das parametrische Fassungsrandmodell zur Segmentierung wie oben beschrieben herangezogen wird, da nur die Parameter zu finden sind und der Fassungsrand im Bild schon identifiziert wurde.

Nach der Bestimmung der Parameter kann das parametrische Fassungsrandmodell dann für weitere Auswertungen verwendet werden. Beispielsweise kann zudem aus dem mindestens einen Bild oder mit einer Abstandsmessung zur Kamera eine Position der Augen bestimmt werden, und aus der Position der Augen und dem parametrischen Fassungsrandmodell können dann die eingangs erwähnten Zentrierparameter bestimmt werden. Da diese Zentrierparameter einfache geometrische Größen sind, ergeben sie sich dann einfach aus der geometrischen Beschreibung des Fassungsrandes, welche durch das parametrische Fassungsrandmodell gegeben ist, und der Position der Augen hierzu. Manche Zentrierparameter, wie z.B. Abmessungen eines Rechtecks, das durch die horizontalen und vertikalen Tangenten an den äußersten Kanten des Brillenglases gebildet wird (Kastensystem nach 5.1 DIN EN ISO 13666:2012), können auch ohne die Position der Augen nur aus dem parametrischen Fassungsrandmodell bestimmt werden, da sie nur von den Abmessungen und der Form des Fassungsrandes abhängen.

Die Anpassung des parametrischen Fassungsrandmodells an einen in einem Bild identifizierten Fassungsrand kann in dem Fall, dass das parametrische Fassungsrandmodell die Vielzahl von Datensätzen oder aus der Vielzahl von Datensätzen abgeleitete weitere Datensätze umfasst, auch darin bestehen, den am besten passenden Datensatz aus der Vielzahl von Datensätzen oder weiteren Datensätzen zu identifizieren. Hierzu werden beispielsweise für alle Datensätze der Vielzahl von Datensätzen oder der Vielzahl von weiteren Datensätzen die Abweichungen von dem identifizierten Fassungsrand berechnet und der Datensatz mit den kleinsten Abweichungen ausgewählt. Die Nummer dieses Datensatzes stellt dann den bestimmten Parameter dar.

Die oben genannten Verfahren werden typischerweise computerimplementiert durchgeführt. Dementsprechend wird gemäß einem weiteren Aspekt der vorliegenden Erfindung ein Computerprogramm mit einem Programmcode bereitgestellt, der, wenn er auf einem oder mehreren Prozessoren einer Recheneinrichtung durchgeführt wird, eines der oben beschriebenen Verfahren ausführt.

Schließlich wird auch eine entsprechende Recheneinrichtung mit einem Prozessor und einem Speicher, in dem ein entsprechendes Computerprogramm gespeichert ist, bereitgestellt. Die Recheneinrichtung weist dabei zudem einen Dateneingang auf, um die Datensätze zu empfangen. Der Dateneingang kann dabei ein Netzwerkanschluss sein, um die Datensätze über ein Netzwerk wie das Internet zu empfangen, oder eine Aufnahme für ein Speichermedium sein, um die auf dem Speichermedium abgespeicherten Datensätze zu empfangen, beispielsweise eine USB-Schnittstelle zur Aufnahme eines Speichersticks oder ein optisches Laufwerk (DVD- oder CD-Laufwerk) zur Aufnahme eines optischen Speichermediums.

Zur weiteren Erläuterung wird die Erfindung nachfolgend anhand von Ausführungsbeispielen unter Bezugnahme auf die beigefügten Zeichnungen näher erläutert. Es zeigen:
- Fig. 1: ein Flussdiagramm eines Verfahrens gemäß einem Ausführungsbeispiel,
- Fig. 2: ein Flussdiagramm eines Verfahrens gemäß einem weiteren Ausführungsbeispiel,
- Fig. 3: ein Blockdiagramm einer Recheneinrichtung gemäß einem Ausführungsbeispiel,
- Fig. 4: ein Diagramm zur Veranschaulichung eines Datensatzes, und
- Fig. 5: eine Darstellung zur Veranschaulichung eines parametrischen Modells.

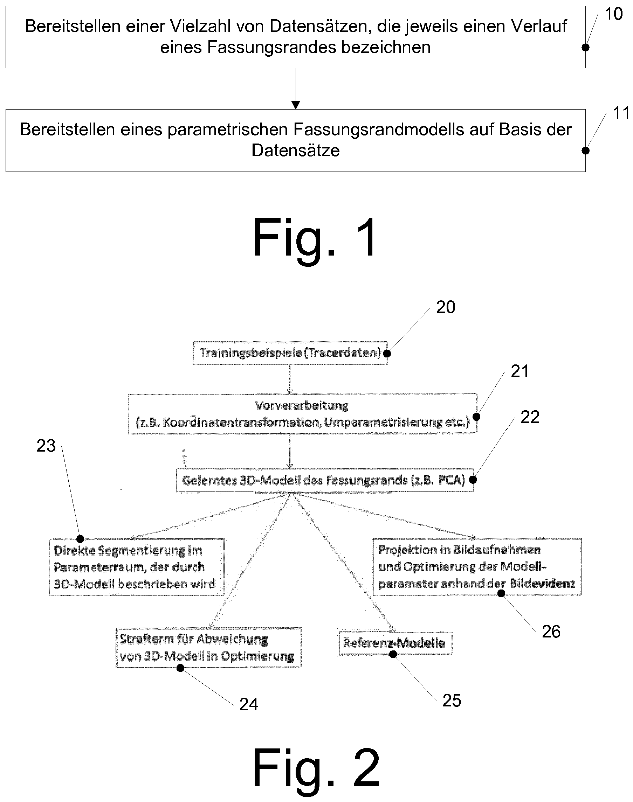

Die Fig. 1 zeigt ein Flussdiagramm, welches allgemein den Ablauf eines Verfahrens gemäß einem Ausführungsbeispiel zeigt. In einem Schritt 10 beinhaltet das Verfahren ein Bereitstellen einer Vielzahl von Datensätzen, die jeweils einen Verlauf eines Fassungsrandes einer Brillenfassung kennzeichnen. Wie bereits erläutert können diese Datensätze Tracer-Daten oder CAD-Daten umfassen. In einem Schritt 11 umfasst das Verfahren dann ein Bereitstellen eines parametrischen Fassungsrandmodells auf Basis der in Schritt 10 bereitgestellten Datensätze, wobei für das Bereitstellen die bereits erläuterten Möglichkeiten verwendet werden können.

Die Fig. 2 zeigt ein detaillierteres Flussdiagramm eines Verfahrens gemäß einem Ausführungsbeispiel. Bei dem Ausführungsbeispiel der Fig. 2 werden in einem Schritt 20 Datensätze, beispielsweise Tracer-Daten, als Trainingsbeispiele bereitgestellt. In einem Schritt 21 erfolgt eine Vorverarbeitung, d.h. ein Transformieren der Datensätze in ein anderes Format, beispielsweise durch Koordinatentransformation oder Umparametrisierung wie bereits beschrieben.

In Schritt 22 wird dann auf Basis der vorverarbeiteten Datensätze ein parametrisches Fassungsrandmodell, in diesem Fall ein 3D-Modell, erzeugt, beispielsweise durch Hauptkomponentenanalyse. Wie durch Schritte 23 bis 26 angedeutet, kann dieses Modell dann auf verschiedene Weise verwendet werden. In Schritt 23 erfolgt beispielsweise eine Segmentierung eines oder mehrerer aufgenommener Bilder zumindest eines Teils eines Kopfes (insbesondere der Augenpartie), welcher eine Brillenfassung trägt, unter Verwendung des 3D-Modells. Hier wird also wie oben beschrieben das parametrische Fassungsrandmodell dazu verwendet, ein Identifizieren eines Fassungsrandes in aufgenommen Bildern zu vereinfachen.

In Schritt 24 wird wie beschrieben bei einem Optimierungsprozess zum Identifizieren eines Fassungsrandes in einem oder mehreren Bildern ein Strafterm auf Basis einer Abweichung eine momentan identifizierten Fassungsrandes von dem parametrischen Fassungsrandmodell erstellt. In Schritt 25 können wie ebenfalls bereits erläutert die Datensätze oder die vorverarbeiteten Datensätze gleichsam als Bibliothek dienen. In Schritt 26 wird zunächst ein Fassungsrand in einem oder mehreren Bildern identifiziert, und die Parameter des parametrischen Fassungsrandmodells werden dann an den identifizierten Fassungsrand angepasst. Die Schritte 23 bis 26 können dann letztendlich dazu dienen, wie beschrieben Zentrierparameter zu bestimmen.

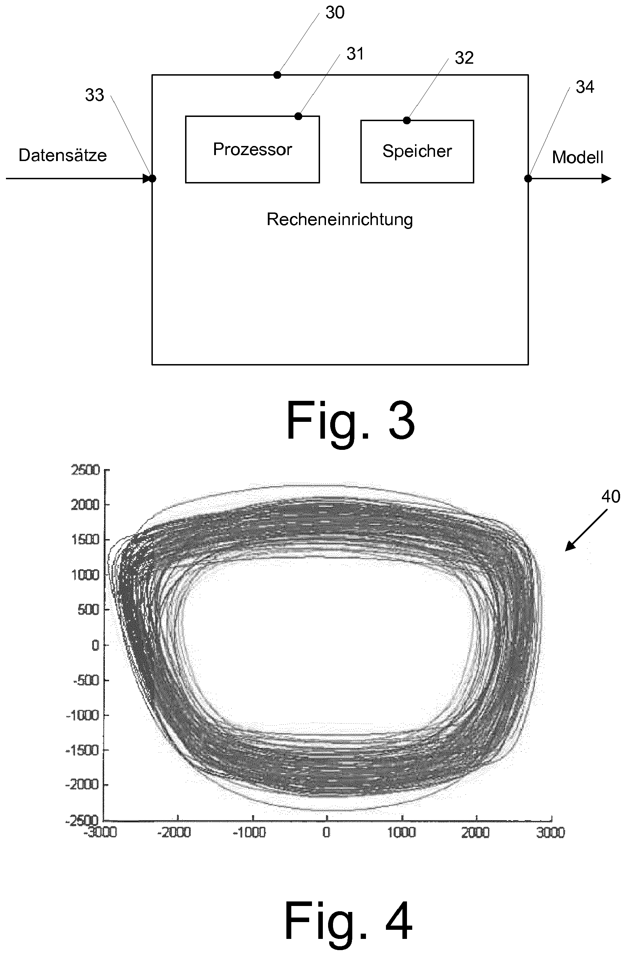

Die Fig. 3 zeigt ein Blockdiagramm einer Recheneinrichtung 30 gemäß einem Ausführungsbeispiel. Die Recheneinrichtung 30 umfasst einen Prozessor 31 sowie einen Speicher 32, beispielsweise einen Speicher mit wahlfreiem Zugriff (RAM) oder einem Nur-Lesespeicher (ROM), in dem ein Programmcode gespeichert ist. Wenn der in dem Speicher 32 gespeicherte Programmcode auf dem Prozessor 31 läuft, werden eine oder mehrere der oben beschriebenen Verfahren, insbesondere das Verfahren der Fig. 1 oder der Fig. 2 ausgeführt. Hierzu werden der Recheneinrichtung 30 über einen Dateneingang 33 entsprechende Datensätze wie die beschriebenen Tracer-Daten oder CAD-Daten zugeführt. An einem Datenausgang 34 wird dann ein entsprechendes parametrisches Fassungsrandmodell, welches wie beschrieben bestimmt wurde, ausgegeben. Zu beachten ist, dass Dateneingang 33 und Datenausgang 34 auch physikalisch identisch sein können, beispielsweise durch eine Netzwerkschnittstelle oder dergleichen gebildet sein kann. Als eine derartige Recheneinrichtung 30 kann beispielsweise ein handelsüblicher Computer verwendet werden, der dann entsprechend programmiert wird.

Die Fig. 4 zeigt in einer 2D-Darstellung eine Vielzahl von Datensätzen 40 zur Veranschaulichung der oben erläuterten Konzepte. In Fig. 4 entspricht jeder Datensatz einer geschlossenen Linie, die den Abschnitt eines Fassungsrandes für ein Brillenglas bezeichnet. Aus dieser Vielzahl von Linien, welche beispielsweise Tracer-Daten aus Messungen verschiedener Brillenfassungen repräsentieren, kann dann wie beschrieben ein parametrisches Fassungsrandmodell erstellt werden.

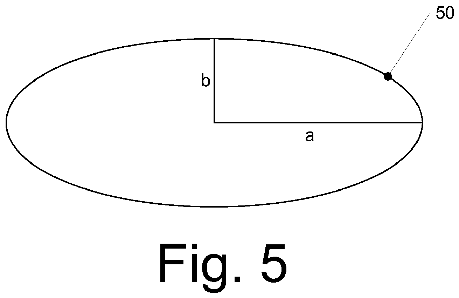

Die Fig. 5 zeigt ein einfaches Diagramm zur Veranschaulichung eines parametrischen Fassungsrandmodells. In dem Beispiel der Fig. 5 dient eine Ellipse 50 als Modell, und als Parameter dienen die große Halbachse a und die kleine Halbachse b der Ellipse 50. In einem der bereits beschriebenen Varianten kann die Ellipse 50 beispielsweise als das vorgegebene parametrische Fassungsrandmodell 50 dienen. Die Ellipse 50 kann dann an jeden Datensatz, beispielsweise an jede der Kurven des Datensatzes 40 der Fig. 4, angepasst werden, um so für jeden Datensatz einen Wert für die große Halbachse a und einen Wert für die kleine Halbachse b zu erhalten. Aus den so ermittelten Werten kann dann eine Wahrscheinlichkeitsverteilung für die Parameter a und b erstellt werden, beispielsweise in Form eines Histogramms oder in Form von Mittelwert und Standardabweichung. Zu bemerken ist, dass die Ellipse 50 in diesem Fall nur als einfaches Beispiel gewählt wurde, und auch komplexere geometrische Formen möglich sind. Allgemein ist zu bemerken, dass die dargestellten und beschriebenen Ausführungsbeispiele nur der Veranschaulichung dienen und nicht als einschränkend auszulegen sind.

## Patentansprüche

1. Verfahren zum Bereitstellen eines Fassungsrandmodells (50), umfassend:
Bereitstellen einer Vielzahl von Datensätzen (40), die jeweils einen Verlauf eines Fassungsrandes einer jeweiligen Brillenfassung beschreiben, und
Bereitstellen eines parametrischen Fassungsrandmodells (50) auf Basis der Vielzahl von Datensätzen.

2. Verfahren nach Anspruch 1, wobei das Bereitstellen des parametrischen Fassungsrandmodells ein Berechnen des parametrischen Fassungsrandmodells aus der Vielzahl von Datensätzen (40) umfasst.

3. Verfahren nach Anspruch 2, wobei das Berechnen ein maschinelles Lernen auf der Vielzahl von Datensätzen (40) umfasst.

4. Verfahren nach Anspruch 2 oder 3, wobei das Berechnen eine Hauptkomponentenanalyse und/oder Unabhängigkeitsanalyse der Vielzahl von Datensätzen (40) umfasst.

5. Verfahren nach einem der Ansprüche 1-4, wobei das Bereitstellen des parametrischen Fassungsrandmodells (50) ein Berechnen von Wahrscheinlichkeitsverteilungen für Parameter (a, b) eines vorgegebenen Fassungsrandmodells auf Basis der Vielzahl von Datensätzen (40) umfasst.

6. Verfahren nach einem der Ansprüche 1-5, wobei das Bereitstellen des parametrischen Fassungsrandmodells ein Bereitstellen der Vielzahl von Datensätzen (40) oder einer Vielzahl von aus der Vielzahl von Datensätzen abgeleiteter weiteren Datensätzen umfasst, wobei ein Parameter des parametrischen Fassungsrandmodells einen Datensatz der Vielzahl von Datensätzen oder der Vielzahl von weiteren Datensätzen angibt.

7. Verfahren nach einem der Ansprüche 1-6, wobei das Bereitstellen des parametrischen Fassungsrandmodells ein Transformieren der Vielzahl von Datensätzen umfasst.

8. Verfahren nach Anspruch 7, wobei das Transformieren eine Koordinatentransformation und/oder ein Abtasten von durch die Datensätzen definierten Kurven in gleichen Winkelabständen und/oder ein Filtern der Datensätze und/oder eine Approximation der Datensätze durch parametrische Kurven umfasst.

9. Verfahren nach Anspruch 8, wobei die Koordinatentransformation eine Transformation auf einander entsprechende Bezugspunkte eines durch den jeweiligen Datensatz beschriebenen Fassungsrandes und/oder ein gleiches Ausrichten der Datensätze umfasst.

10. Verfahren zur Bildanalyse, umfassend:
Bereitstellen mindestens eines Bildes zumindest eines Teils eines Kopfes mit einer Brillenfassung,
Bereitstellen eines parametrischen Fassungsrandmodells, welches mit dem Verfahren eines der Ansprüche 1-9 erstellt wurde, und
Analysieren des mindestens einen Bildes unter Verwendung des parametrischen Fassungsrandmodells.

11. Verfahren nach Anspruch 10, wobei das Analysieren des Bildes ein Identifizieren eines Fassungsrandes in dem mindestens einen Bild unter Zuhilfenahme des parametrischen Fassungsrandmodells umfasst.

12. Verfahren nach Anspruch 11, wobei das Identifizieren des Fassungsrandes einen Optimierungsprozess mit einem Strafterm in Abhängigkeit von einer Abweichung eines zu optimierenden Fassungsrandes von dem parametrischen Fassungsrandmodell und/oder ein Identifizieren des Fassungsrandes auf Basis von Wahrscheinlichkeitsverteilungen von Parametern des parametrischen Fassungsrandmodells umfasst.

13. Verfahren nach Anspruch 10, wobei das Analysieren ein Identifizieren eines Fassungsrandes in dem mindestens einen Bild und ein Anpassen von Parametern des parametrischen Fassungsrandmodells auf Basis des identifizierten Fassungsrandes umfasst.

14. Computerprogramm mit einem Programmcode, welcher, wenn er auf einem Prozessor ausgeführt wird, das Verfahren nach einem der Ansprüche 1-13 ausführt.

15. Recheneinrichtung, umfassend:
einen Prozessor,
einen Dateneingang zum Empfangen einer Vielzahl von Datensätzen, die jeweils einen Verlauf eines Fassungsrandes einer jeweiligen Brillenfassung beschreiben, und
einen Speicher, wobei in dem Speicher das Computerprogramm nach Anspruch 14 gespeichert ist.
